# EUROPÄISCHE PATENTSCHRIFT

(11) **EP 2 296 857 B1**
(45) Veröffentlichungstag und Bekanntmachung des Hinweises auf die Patenterteilung: **23.11.2011**
(21) Anmeldenummer: 09775905.4
(22) Anmeldetag: 24.06.2009
(51) Int. Cl.: B29B 9/06, B26D 7/26

(54) **STRANGGRANULATOR MIT SCHNEIDSPALTVERSTELLUNG UND VERFAHREN ZUR JUSTAGE DES SCHNEIDSPALTES**
STRAND PELLETIZER WITH CUTTING CLEARANCE ADJUSTMENT AND METHOD FOR ADJUSTMENT OF THE CUTTING CLEARANCE
GRANULATEUR DE JONCS À ESPACE DE COUPE RÉGLABLE ET PROCÉDÉ DE RÉGLAGE POUR L'ESPACE DE COUPE

(30) Priorität: 16.07.2008 DE 102008033425
(43) Veröffentlichungstag der Anmeldung: 23.03.2011
(73) Patentinhaber: Ips Intelligent Pelletizing Solutions Gmbh&Co. Kg, 63762 Grossostheim (DE)
(72) Erfinder: WEIS, Gerald, 63741 Aschaffenburg (DE); NÖTZEL, Oliver, 63785 Obernburg (DE)
(74) Vertreter: Pöhner, Wilfried Anton
(86) Internationale Anmeldenummer: PCT/DE2009/000874
(87) Internationale Veröffentlichungsnummer: WO 2010/006572

(56) Entgegenhaltungen:
- EP-A1- 0 552 396
- DE-A1- 3 620 015
- DE-A1- 19 933 497
- DE-C1- 10 106 677

## Beschreibung

Die Erfindung bezieht sich auf einen Stranggranulator zum Zerteilen von strangförmigem Material, bestehend aus einer Einzugswerk für die Zuführung des zu zerteilenden Materials und einem drehbaren Schneidrotor mit darauf angeordneten Schneidezähnen und einer Schneidleiste, die das Gegenstück zu den daran vorbei rotierenden Schneidezähnen ist und die auf einem Schneidleistenhalter befestigt ist und ein Schneidspalt zwischen Schneidleiste und einem Schneidezahn durch eine Bewegung des Schneidleistenhalters gegenüber dem Schneidrotor verstellbar ist

Auf aktuellem Stand der Technik wird Granulat dadurch hergestellt, dass stangenförmiges oder strangförmiges Material in sehr kurze Abschnitte quergeteilt wird. Dafür wird der Strang von einem Einzugswerk eingezogen, das aus zwei parallel zueinander ausgerichteten Einzugswalzen besteht, die an ihrer Oberfläche zur besseren Griffigkeit geriffelt sind. Je eine Walze drückt auf je eine Seite des Stranges, greift ihn auf diese Weise und führt ihn zwischen diesen beiden Walzen hindurch auf einen drehbaren Schneidrotor. Auf dem Schneidrotor sind Schneidezähne angeordnet, die an einer Schneidleiste vorbeilaufen. Zwischen den Schneidezähnen und der Schneidleiste wird ein Stück vom Strang abgeschnitten.

Die Schneidezähne verlaufen in der einfachsten Variante etwa parallel zur Drehachse des Schneidrotors und haben ein etwa dreieckiges Profil. Das Dreieck schließt sich mit einer Kante an den Körper des Schneidrotors an. Die beiden anderen Kanten sind ungleich lang, so dass sich das Dreieck des Profils in die Arbeitsdrehrichtung des Schneidrotors "neigt". Die in Drehrichtung vordere Kante des Dreiecks nimmt also einen Winkel von weniger als 90 Grad zu einer Tangente an den Kern des Schneidrotors ein. Bei den nach hinten weisende Kanten ist der Winkel zur Tangente größer als 90Grad. Dadurch zieht der Schneidrotor bei Drehung in Arbeitsrichtung - auch Vorwärtsbewegung genannt - radial zugeführt Gegenstände an sich heran.

Die Schneidezähne können auch spiralförmig über den Schneidrotor hinweg verlaufen. Die spiralförmige Anordnung sorgt dafür, dass der Schnittpunkt zwischen der geraden Schneidleiste und dem rotierenden Schneidezähnen über die Schneidleiste hinweg wandert. Die Steigung der Spirale kann so gewählt werden, dass - wenn ein Schneidezahn die gesamte Schneidleiste passiert hat - sogleich am anderen Ende der Schneidleiste der nächste Schneidezahn auf dem Schneidrotor mit der Schneidleiste in Berührung tritt. Dadurch wird stets an einem einzigen Punkt der Schneidleiste geschnitten, wodurch die Spitzenbelastung der Maschine geglättet und das Schneidegeräusch minimiert wird.

Es zählt zum allgemeinen Wissensstand, dass eine Schere umso besser schneidet, je näher ihre beiden Schneiden während des Schnittes aneinander vorbeigleiten. Idealerweise ist der Schneidspalt zwischen den Schneiden - bei einem Stranggranulator also zwischen Schneidezahn und Schneidleiste - exakt Null. Das ist in der Praxis natürlich nicht mit vertretbarem Aufwand realisierbar, da die Abmessungen aller Schneidezähne auf der Walze eine gewisse Toleranz haben. Weitere Toleranzen entstehen durch den Abrieb der Schnittkanten während des Gebrauchs.

Daher ist es nötig, den Spalt zwischen den Schneidezähnen und der Schneidleiste laufend neu zu justieren. Auf aktuellem Stand der Technik ist dafür die Schneidleiste durch eine Klemmvorrichtung, wie z. B. eine Schraube in einem Langloch fixiert. Nach dem Lösen der Schrauben lässt sich der Schneidspalt zwischen dem aktuell eingreifenden Schneidezähnen und der Schneidleiste verändern. Da ein Schneidspalt Null nicht erreichbar ist, werden Fühlerlehren zwischen Schneidezähnen und Schneidleiste geschoben, die den geforderten - sehr kleinen - Schneidspalt einstellen. Ein Nachteil dieser Anordnung ist, dass eine frei aufliegende Schneidleiste nur mit Mühen manuell um winzige Entfernungen zu verschieben ist.

Zur Erleichterung dieser Aufgabe sind Exzenter bekannt, die gegen die Schneidleiste drücken. Durch Verschwenken des Exzenters um einen vergleichsweise großen Verschwenkungswinkel wird die Schneidleiste um einen sehr geringen Betrag bewegt.

Auch mit dieser Einstellhilfe verbleibt der Nachteil, dass die Schneidleiste sich durch das Anziehen der Schrauben wiederum etwas verschieben kann, sodass eine erneute Justageprozedur eingeleitet werden muss. Ein weiterer Nachteil dieses bekannten Verfahrens ist, dass eine einmal gefundene Einstellung nur für einen bestimmten Schneidezahn gilt. Die Einstellung ist jedoch auf den am weitesten herausragenden Schneidezahn zu optimieren, sodass im ungünstigsten Falle der letzte, geprüfte Schneidezahn auch der am weitesten herausragende ist.

Auf aktuellem Stand der Technik schlägt dazu die OS-DE 199 33 497 A1, Harwarth vor, dass die Schneidleiste auf einem Schlitten befestigt ist, der als Linearführung ausgebildet ist, also zwei weit voneinander entfernte Schienenführungen mit einem in Verschieberichtung relativ langen Schlitten aufweist. Die Verfahrrichtung des Schlittens weicht nur geringfügig von einer Parallelen zur Schnittkante ab. Dadurch wird erreicht, dass sich trotz eines relativ großen Verfahrweges des Schlittens der Schneidspalt zwischen Schneidleiste und Schneidezähnen nur geringfügig ändert.

Diese Schlittenkonfiguration ist insbesondere für eine elektromotorische Verstellung über eine Mikrometerschraube mit einem Schrittmotor gedacht.

Als Feineinstellung beschreibt die DE 199 33 497 A1, die eine vorrichtung gemäß dem Oberbegriff des Anspruchs 1 offenbart, eine sehr tiefe Kerbe im Profil des Träger für die Schneidleiste. In diese Profilkerbe sind Druckelemente eingeschoben, welche den Träger federartig auseinander spreizen und dadurch die Schneidleiste um einen geringen Betrag bewegen.

Eine weitere Verfeinerung ist die Erfassung der Spaltbreite durch einen elektronisch auswertbaren Sensor. Damit lässt sich ein geschlossener Regelkreis aufbauen, bei dem der Schneidspaltsensor als Istwertgeber fungiert, der Schrittmotor zur Grobverstellung und das Druckelement zur Feinverstellung dient. Der ganz entscheidende Nachteil dieser Anordnung ist ihre Komplexität, der damit verbundene hohe Aufwand und die zu befürchtende, geringe Lebensdauer und hohe Reparaturanfälligkeit.

Ebenfalls auf aktuellem Stand der Technik beschreibt die PS DE 69 211 672 als Stranggranulator zwei parallele, rotierende Walzen von denen eine axiale Schlitze in der Außenfläche aufweist, in die Schneidezähne eingespannt werden. Bei jedem Schnitt berührt die Kante eines Schneidezahns die gegenüberliegende rotierende Walze. Zum Ausgleich von Ungenauigkeiten bei der Einstellung und von Toleranzen der einzelnen Schneidezähne untereinander sind sie federnd im Schlitz gelagert. Zum Ausgleich der nach dem Schleifen der Zähne entstandenen Verluste kann die Einspannung der Zähne in radialer Richtung angehoben werden, in dem ein Keil in axialer Richtung zwischen Zähne und Walze eingeschoben wird.

Nachteilig ist, dass jeder Zahn auf der Walze einzeln eingestellt werden muss. Eine gesamte Verstellung, die auf alle Zähne zugleich wirkt, ist nicht möglich.

Ein weiterer Nachteil ist der hohe mechanische Aufwand für jeden einzelnen Zahn.

Diese Verstelleinrichtung wird auch dadurch noch aufwendiger, dass sie den hohen Zentrifugalkräften beim schnellen Rotieren des Schneidrotors Stand halten muss.

Auf diesem Hintergrund hat sich die Erfindung die Aufgabe gestellt, eine Verstellvorrichtung für den Schneidspalt eines Stranggranulators zu schaffen, die rein mechanisch arbeitet, wobei die erforderlichen Schritte zur Verstellung soweit vereinfacht sind, dass jegliche Messungen entfallen und die Genauigkeit der erreichbaren Einstellung wenigstens so hoch wie bisher ist, auch wenn nur gering qualifiziertes Personal die Einstellung vornimmt.

Als Lösung dieses Problems schlägt die Erfindung vor, dass der Schneidspalt auf Null reduzierbar ist, indem der Schneidleistenhalter nach Lösen einer Feststellvorrichtung durch die Kraft wenigstens einer Feder an den Schneidrotor andrückbar ist und eine Selbsthemmung auf den Schneidleistenhalter andrückbar ist, welche die Bewegbarkeit des Schneidleistenhalters durch die Kraft der Feder hemmt, aber noch eine Bewegbarkeit durch die Kräfte der Schneidezähne bei Drehung des Schneidrotors entgegen seiner Arbeitsrichtung zulässt und die Selbsthemmung vom Schneidleistenhalter lösbar ist.

Die Erfindung nutzt dabei, dass bei Drehung des Schneidrotors entgegen der Arbeitsrichtung - also bei Rückwärtsdrehung - radial in den Schneidrotor herein geführte Gegenstände von der auftreffenden Flanke der dreieckig profilierten Schneidezähne wie von einem Keil zurück gestoßen werden. Dieser Effekt wirkt auf die Schneidleiste, wenn sie vom Schneidleistenhalter in den Schneidrotor hinein gedrückt wird.

Je nach derzeitiger Winkelstellung des Schneidrotors kann die Schneidleiste beim ersten Eindringen in den Schneidrotor nur wenig oder sogar ganz tief - bis zum Anschlag - in den Zwischenraum zwischen zwei benachbarten Schneidezähnen eindringen.

Dafür wird die Feststellvorrichtung des Schneidleistenhalters gelöst, so dass durch die Kraft einer Feder bewegbar wird und die Schneidleiste auf einen Schneidezahn drückt.

Wenn sich der Schneidrotor dann ganz langsam eine Rückwärtsdrehung.beginnt, schiebt die Flanke des Schneidezahns die Schneidleiste von sich weg und zwar solange, bis die Schneidkante des Schneidezahns erreicht ist.

Wenn sich der Schneidrotor weiterdreht, würde die Schneidkante eigentlich an der anderen "vornüber geneigten" Flanke des Schneidezahns vorbei wieder in den Schneidrotor hineinspringen. Daran wird sie jedoch von der so genannten Selbsthemmung gehindert. Diese Selbsthemmung ist eine Vorrichtung, die auf den Schneidleistenhalter andrückbar ist, und dadurch die Bewegbarkeit des Schneidleistenhalters durch die Kraft der zuvor genannten Feder hemmt, aber noch eine Bewegbarkeit durch die - der Feder entgegen gerichteten Kräfte der Schneidezähne bei Rückwärtsdrehung des Schneidrotors zulässt.

Die Selbsthemmung sorgt also dafür, dass der Schneidleistenhalter nicht wieder zurückspringt, wenn die Schneidleiste bei Rückwärtsdrehung des Schneidrotors eine ansteigende Flanke eines Schneidezahns verlässt. Vielmehr bleibt der Schneidleistenhalter dann stehen.

Theoretisch sollten alle Schneidezähne von gleicher Größe sein, so dass sich alle ihre Schnittkanten auf dem gleichen Flugkreis bewegen. In der Praxis unterscheidet sich ihr Flugkreis jedoch um etliche Hundertstel Millimeter. Wenn also während der Justage des Schneidspaltes auf einen "großen" Schneidezahn ein "kleinerer" Schneidezahn folgt, dann bleibt der Schneidleistenhalter stehen, weil er von der Selbsthemmung festgehalten wird. Wenn aber der nächste Schneidezahn etwas größer als der vorhergehende ist, dann bewegt sich der Schneidleistenhalter noch etwas weiter, nämlich um die Differenz zwischen der Größe dieser beiden Schneidezähne.

Nach einer vollständigen Umdrehung des Schneidrotors haben alle Schneidezähne die Schneidleiste passiert, so dass die Schneidleiste auf den größten aller Schneidezähne ausgerichtet worden ist. Zwischen dem größten Schneidezahn und der Schneidleiste ist dann der Schneidspalt exakt Null. Der Schneidspalt zum kleinsten Schneidezahn wird von dessen Untermass bestimmt. Dieser Schneidspalt ist von der Toleranz der Schneidezähne des Schneidrotors vorgegeben und kann auch durch die erfindungsgemäße Justage nicht eliminiert werden.

In dieser Stellung wird der Schneidleistenhalter dann mit der Feststellvorrichtung fixiert. Damit ist erreicht, dass die Schneidleiste den jeweils kleinsten möglichen Schneidspalt zu den Schneidezähnen hat.

Bei einer bestimmten Paarung zwischen Schneidleiste und Schneidezähnen ist der Schneidspalt zumindest an einem Punkt tatsächlich Null und an allen anderen Punkten nur so gering, wie es der jeweilige Abnutzungsstand des Schneidezähnens ergibt. Wenn an irgendeiner Stelle trotzdem noch unerwünschte oder gar unzulässig große Abstände auftreten, so sind diese durch ungenaue Fertigung oder durch Abrieb begründet.

Im Vergleich zu dem bisher üblichen, einfachen Verfahren mit einer frei in beide Richtungen verschiebbaren Schneidleiste, ist der entscheidende Vorteil der Erfindung, dass der einstellenden Person das fortwährende Verschieben der Schneidleistenhalter und das Nachmessen des erreichten Schneidspaltes erspart bleibt. Vielmehr wird die Verschiebung durch den rückwärts drehenden Schneidrotor ausgeführt.

Die Tätigkeit der justierenden Person reduziert sich auf das schrittgerechte Lösen und wieder Festsetzen der Feststellvorrichtung für den Schneidleistenhalter und der Fixierung der Selbsthemmung. Dabei muss sie zwischen den folgenden drei Schritten unterscheiden:
**Im ersten** Schritt wird bei stehendem Schneidrotor
   - die Selbsthemmung vom Schneidleistenhalter gelöst und
   - die Feststellvorrichtung für die Bewegbarkeit des Schneidleistenhalters gelöst wird, so dass
   - die Schneidleiste vom Schneidleistenhalter durch die Kraft der Feder an wenigstens einen Schneidezahn angedrückt wird und
Im **zweiten** Schritt wird
   - die Selbsthemmung an den Schneidleistenhalter 4 gedrückt und
   - der Schneidrotor rückwärts - d.h. entgegen seiner Arbeitsrichtung - mit einer sehr niedrigen Drehzahl um eine ganze Umdrehung gedreht, wodurch die Flanken der Schneidezähne die Schneidleiste 3 vom Schneidrotor weg drücken.

Im **dritten** Schritt wird die Feststellvorrichtung wieder angezogen, wodurch der Schneidleistenhalter fixiert wird. Nunmehr ist der Schneidspalt auf den kleinstmöglichen Wert justiert.

Damit sinkt entweder die Anforderung an das benötigte Personal erheblich oder es wird im Vergleich zur bisherigen Technik mit gering qualifizierten Mitarbeitern eine deutliche Steigerung der Genauigkeit des Einstellergebnisses erreicht.

In einer Ausführungsvariante eines erfindungsgemäßen Stranggranulators ist sogar eine mannlose Automatisierung der Schneidspalteinstellung realisierbar. Dazu muss das Fixieren des Schneidleistenhalters und das Feststellen der Selbsthemmung von einem Aktor wie z.B. einem Pneumatikzylinder übernommen werden. Diese beiden Aktoren müssen den Befehlen einer Steuerung folgen, die auch die Drehung des Schneidrotors überwacht und für die richtige Drehrichtung und eine passende Drehzahl sorgt.

In der ersten Ausbaustufe dieser Steuerung würde die Abstimmung der Feder zur Bewegung des Schneidleistenhalters und der Vorrichtung zur Selbsthemmung an die jeweiligen Reibwerte so wie in der rein mechanischen Ausführungsform manuell erfolgen.

In einer zweiten Ausbaustufe könnten kleine Stellmotoren z.B. die Vorspannung der jeweiligen Federn für die Bewegung des Schneidleistenhalters oder der Selbsthemmung vornehmen und in Testläufen während des Stillstandes des Granulators regelmäßig prüfen.

In Abhängigkeit vom Werkstoff der Schneidleiste, der Schneidezähne und des zu zerteilenden, strangförmigen Materials kann ein bestimmter, geringer Schneidspalt größer als Null zwischen Schneidleiste und Schneidezähnen vorteilhaft sein. Um diese Vergrößerung des Schneidspaltes einzustellen, sieht die Erfindung als weitere Ausführungsform einen Schneidspaltvergrößerer vor, der den Schneidspalt um einen relativ sehr geringen Betrag vergrößert. Er soll später erläutert werden.

Zunächst werden für die Bewegung des Schneidleistenhalters verschiedene, alternative Ausführungsformen vorgestellt.

In einer Ausführungsvariante besteht die kraftaufbringende Feder aus zwei parallelen und zueinander beabstandeten Federblättern, die jeweils an einem Ende ortsfest eingespannt sind und am anderen Ende den Schneidleistenhalter tragen. In dieser Konfiguration dienen die Federblätter nicht nur zur Aufbringung der Kraft, sondern auch als Verschwenkhebel. Der Schneidleistenhalter wird auf diesen beiden Federblättern wie ein Parallelogramm verschwenkt. Eine solche Anordnung kann sogar einstückig hergestellt werden, indem z. B. aus einer Platte ein erster großer Block zur Befestigung am Schneidleistenhalter ausgeschnitten wird, der über zwei sehr schmale und daher federnde Segmenten mit einem zweiten Block verbunden ist, der als Befestigungsplatte dient.

Vorteilhaft an dieser Konfiguration ist, dass keinerlei verschleißbehaftete Gelenke geschmiert oder gewartet werden müssen, dass kein Verschleiß auftritt und die Anordnung absolut spielfrei ist.

Genau genommen arbeiten die beiden Federblätter im Bereich kleiner Verschwenkwinkel nahezu so wie ein verschwenkbarer Hebel, bewegen den Schneidleistenhalter also etwa auf einem Kreisbogen. Daraus folgt, dass die Länge der Federblätter ausreichen muss, um den Angriffspunkt der Schneidleiste auf die Schneidezähnen stets im Bereich einer tangentialen Berührung zu halten.

Als alternative Ausführungsform zu den fest eingespannten Federn, kann der Schneidleistenhalter auf einer Ebene verschiebbar sein, die etwa in Richtung der Justage des Schneidspaltes verläuft und als Führung dient. Um den Schneidleistenhalter darauf festzuhalten, ist am Schneidleistenhalter wenigstens eine teilelastische Stange mit einem Ende fixiert. Mit dem anderen Ende wird sie durch eine Bohrung in einer ortsfesten Öse oder in einer Trägerplatte geführt und stützt sich dabei auf der zur Stange gegenüberliegende Fläche der Öse oder der Trägerplatte mittels einer Feder ab Die teilelastische Stange fungiert ähnlich wie ein Schwenkhebel, der jedoch nicht in einem Gelenk fixiert ist, sondern in sich verformt wird. Die Federn am anderen Ende der teilelastischen Stange dienen zum Ausgleich der sich ändernden, wirksamen Länge in Bezug auf die Ebene der Verschiebung.

Als eine weitere, alternative Ausführungsform sind in den Schneidleistenhalter zwei parallel verlaufende Schlitze oder Langlöcher eingebracht, in die je eine ortsfeste Passfeder oder je ein anderes, ortsfestes Gleitstück eingreift, an dem entlang der Schneidleistenhalter verschiebbar ist. Diese Anordnung ähnelt einem Schlitten, jedoch sind im Unterschied zu den Kufen eines Schlittens die Gleitstücke relativ sehr kurz. Dadurch können die Gleitstücke nicht als Parallelführung wirken, sodass auf beiden Seiten des Schneidleistenhalters je eine Andruckfeder erforderlich ist.

Der Vorteil dieser Variante gegenüber einem Schlitten ist, dass nicht nur der Aufwand einer Parallelführung erspart wird, sondern auch deren Nachteil, nämlich die mangelnde Anpassungsfähigkeit an einseitig abgenutzte Schneidmesser. Das relativ kurze Langloch, das vorzugsweise etwa senkrecht zur Schneidkante ausgerichtet ist, er fordert während der Justage nur einen sehr kurzen Verfahrweg. Dadurch ist es trotz einem sehr geringen Spiel zwischen Gleitstück und Langloch möglich, die beiden Enden der Schneidleiste um geringfügig verschiedene Wege zu verfahren, wodurch die Schneidleiste an einseitig stärker abgenutzte Schneidmesser optimal angepasst werden kann.

Hiermit ist die Beschreibung von drei Ausführungsformen für die Bewegbarkeit des **Schneidleistenhalters** abgeschlossen.

Im Folgenden sollen verschiedene Ausführungsformen für die **Selbsthemmung** präsentiert werden. Die Selbsthemmung ist eine Vorrichtung, die auf den Schneidleistenhalter andrückbar ist und dadurch die Bewegbarkeit des Schneidleistenhalters durch die Kraft der Feder hemmt, aber noch eine Bewegbarkeit durch die Kräfte der

Schneidezähne bei Drehung des Schneidrotors entgegen seiner Arbeitsrichtung zulässt

Als eine Variante der Selbsthemmung des Schneidleistenhalters dient ein **Keil,** der auf einer Gleitebene aufliegt, die zur Bewegungsrichtung des Schneidleistenhalters geneigt oder senkrecht ausgerichtet ist.

In einer zweiten Ausführungsvariante der Selbsthemmung weist der Schneidleistenhalter ebenfalls eine Gleitebene auf, die zu seiner Bewegungsrichtung geneigt oder senkrecht orientiert ist. Anstelle des Keils bei der vorherigen Variante wird die Gleitebene jedoch von einer **Exzenterscheibe** (auch **Kurvenscheibe** oder **Nocke** genannt) berührt, um die Verschiebung zu hemmen. Durch die Verschwenkung der Exzenterscheibe um eine Schwenkachse mittels eines federbelasteten Hebels hemmt der Exzenter die Bewegung des Schneidleistenhalters.

Als dritte Ausführungsvariante der Selbsthemmung dient ein federbelasteter **Kipphebel,** durch dessen Bohrung eine glatte Welle geführt ist, auf der sich der Kipphebel durch die Kraft der Feder verkeilt. Zum Lösen des Kipphebels muss er entgegen der Kraft seiner Feder geschwenkt werden.

In einer weiter verfeinerten Ausführungsform eines erfindungsgemäßen Stranggranulators soll der Schneidspalt nicht auf Null oder möglichst nahe an Null justiert werden, sondern auf eine größere Weite. Für bestimmte Strangmaterialien und bestimmte Geschwindigkeiten haben viele Anwender ganz bestimmte Werte für Spaltbreiten erarbeitet, die ein optimaler Kompromiss zwischen der Genauigkeit der Schnittkante, der Verarbeitungsgeschwindigkeit der Maschine und der Standzeit von Schneidezähnen und Schneidleiste sind. Dafür kann der erfindungsgemäße Stranggranulator mit einem Schneidspaltvergrößerer ausgestattet werden.

In einer ersten Variante ist das eine Verstellschraube mit Feingewinde, die auf den Schneidleistenhalter drückt und dadurch den Schneidspalt etwas vergrößert.

In einer zweiten Ausführungsform des Schneidspaltvergrößerers wird die Selbsthemmung mittels Keil um die Funktion eines Schneidspaltvergrößerers erweitert, indem der Keil zur Selbsthemmung durch eine Einstellschraube verschiebbar ist.

Alternativ kann auch ein zweiter Keil als Schneidspaltvergrößerer eingebaut werden.

In einer dritten Ausführungsform ist der Schneidspaltvergrößerer eine weitere, verschwenkbare Excenterscheibe oder Kurvenscheibe oder Nocke. Sie wird durch die Kraft einer weiteren Feder oder eines Gewichtes am Ende eines Hebels auf eine Gleitfläche gedrückt.

Dabei kann jede der drei geschilderten Varianten für die Selbsthemmung mit jeder der beschriebenen Ausführungsformen eines Schneidspaltvergrößerers kombiniert werden. Und diese Kombinationen können wiederum mit den drei verschiedenen Ausführungsformen für die Bewegung des Schneidleistenhalters kombiniert werden, nämlich einer Schwenkbewegung mittels Federblättern oder teilelastischen Stangen oder alternativ einer Linearbewegung mit Führung in Schlitzen oder Langlöchern. Daraus ergibt sich eine sehr große Anzahl von möglichen Kombinationen, von denen jedoch nur drei in den Figuren vorgestellt werden.

Weitere Varianten ergeben sich dadurch, dass der Schneidspaltvergrößerer entweder **außerhalb** vom oder nur **auf** dem Schneidleistenhalter befestigt ist. Wenn er außerhalb angeordnet und befestigt ist, muss er auf eine Gleitebene zugreifen, die auf dem Schneidleistenhalter angeordnet ist. Eine Einschränkung dieser Variante ist, dass der Schneidspaltvergrößerer unter Umständen während der Null-Justage des Schneidspaltes gelöst werden muss, um nicht aus seinem Arbeitsbereich heraus gefahren zu werden.

Dann kann er nach dem Abschluss der Justage des Schneidspaltes zu dessen gewünschter, ganz bestimmter Vergrößerung womöglich auf dieselbe Gleitebene wie die Selbsthemmung zugreifen.

Für erfindungsgemäße Stranggranulatoren, die mit der Option eines Schneidspaltvergrößerers ausgerüstet, sind, sind zusätzlich zu den drei Schritten zur Null-Justage die folgenden Schritte Drei bis Acht zur Vergrößerung des Schneidspaltes erforderlich:
Im vierten Schritt wird eine Fixierung am Schneidspaltvergrößerer gelöst und im fünften Schritt der Schneidspaltvergrößerer soweit bewegt, bis er in festen Kontakt mit seinem Gegenstück auf dem Schneidleistenhalter gekommen ist. Dann kann im sechsten Schritt die Feststellvorrichtung des Schneidleistenhalters gelöst werden.

Erst jetzt - im siebten Schritt - kann der Schneidspalt 41 durch Aktivieren des Schneidspaltvergrößerers je nach dessen Bauart auf das gewünschte Maß vergrößert werden. Zum Abschluss wird im achten Schritt die Feststellvorrichtung des Schneidleistenhalters wieder angezogen, so dass er den Schnittkräften standhalten kann, die von den Schneidezähnen auf die Schneidleiste ausgeübt werden.

Als weiteres Ausstattungsmerkmal kann für das Ablesen der Schneidspaltvergrößerung an einer Fuge zwischen einem festen und einem bewegbaren Teil auf der einen Seite eine Skala mit Messstrichen gleicher Breite und auf dem anderen Teil ein Nonius zur Interpolation von Werten zwischen den Messstrichen aufgebracht werden.

Im Folgenden sollen weitere Einzelheiten und Merkmale der Erfindung anhand von mehreren Beispielen näher erläutert werden. Diese sollen die Erfindung jedoch nicht einschränken, sondern nur erläutern. Es zeigt in schematischer Darstellung:
- Figur 1: Schnitt durch einen Stranggranulator nach Stand der Technik
- Figur 2: Schnitt wie Figur 1, jedoch mit zwei parallelen Federblättern zur Verschwenkung des Schneidleistenhalters 4
- Figur 3: Schnitt wie Figur 1, jedoch mit zwei teilelastischen Stangen zur Verschwenkung des Schneidleistenhalters 4
- Figur 4: Schnitt wie Figur 1, jedoch mit Gleitstück zur Verschiebung des Schneidleistenhalters 4

Die Figuren zeigen im Einzelnen:

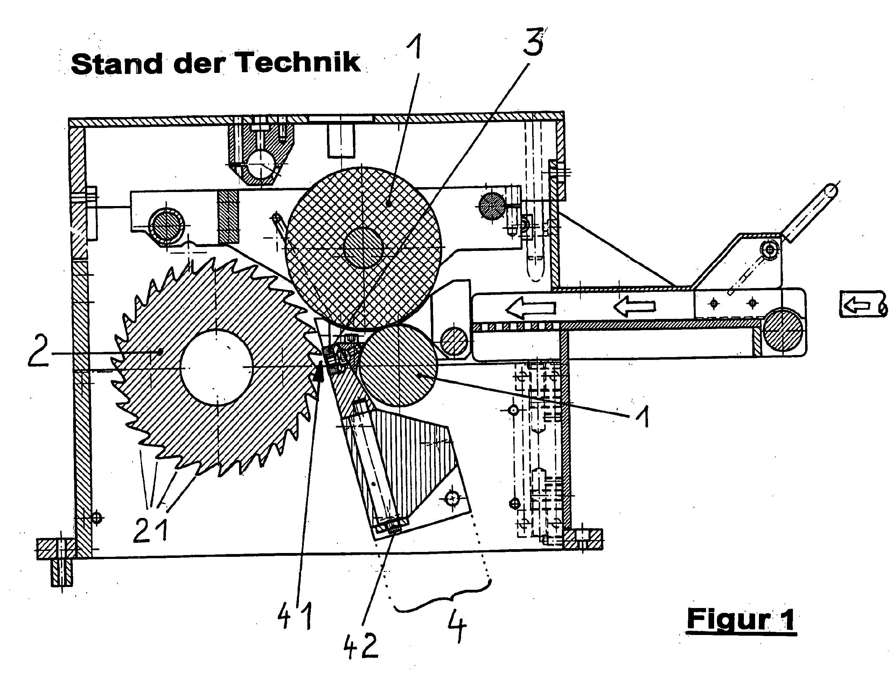

In **Figur 1** ist der Schnitt durch einen Stranggranulator auf dem aktuellen Stand der Technik wiedergegeben. Ganz rechts ist ein kleiner Abschnitt eines strangförmigen Materials gezeichnet und mit einem Pfeil dessen Bewegungsrichtung markiert. Auf einem Einschubgestell wird das strangförmige Material weiter zu den beiden Walzen des Einzugswerks 1 geführt, und durch deren Drehung dann kontinuierlich eingezogen und dem Schneidrotor 2 zugeführt.

In Figur 1 ist links ist der Schnitt durch den Schneidrotor 2 mit zahlreichen, darauf angeordneten Schneidezähnen 21 zu erkennen. Sobald der Schneidrotor 2 in Drehung versetzt wird, bewegen sich die Schneidezähne 21 an der Schneidleiste 3 entlang und bilden dabei den - sehr schmalen - Schneidspalt 41. Jeder Schneidezahn 21 erfasst das Ende des strangförmigen Materials mit seiner Schneidekante, drückt es auf die Schneideleiste 3 und schneidet es dann im Schneidspalt 41 vom Strang ab. Dieser Abschnitt fällt dann als ein weiteres Granulatteilchen nach unten.

Zwischen jedem neu eintreffenden Schneidezahn 21 und der Schneidleiste 3 wird ein weiteres Stück von dem strangförmigen Material abgeschnitten, das über das Einzugswerk 1 laufend zugeführt wird.

In Figur 1 ist nicht eingezeichnet, wie das Profil der Schneidezähne 21 senkrecht zur Schnittebene der Figur 1 weiter geführt wird. Entweder verlaufen die Schneidezähne 21 parallel zur Drehachse des Schneidrotors 2 oder sie sind spiralförmig um den Schneidrotor 2 herumgeführt. Bei entsprechender Steigung der Spirale steht über die gesamte Schnittbreite des Schneidrotors hinweg stets ein Punkt eines Schneidezahns mit der Schneidleiste 3 in Berührung.

In Figur 1 ist die bisher übliche, mechanische Verstellung des Schneidleistenhalters 4 durch Lösen einer Schraube, mehrfaches Verschieben und Vermessen des Schneidspaltes 41 zwischen allen Schneidezähnen 21 und der Schneidleiste 3 solange bis der gewünschte Schneidspalt 41 erreicht ist und anschließendem Festziehen der Feststelleinrichtung 42 dargestellt. In Figur 1 ist nachvollziehbar, dass Hilfsvorrichtungen für diese Einstellarbeit fehlen und der Einstellprozess deshalb nur durch wiederholte Versuche an das Optimum angenähert werden kann, also sehr zeitraubend ist.

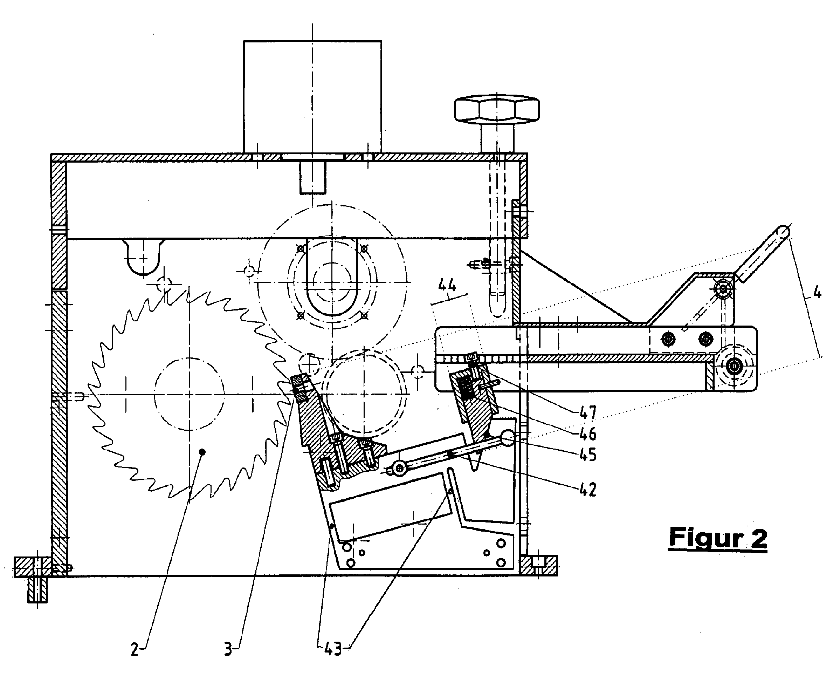

In **Figur 2** ist als erfindungsgemäße Ausführungsvariante die Verschwenkbarkeit des Schneidleistenhalters 4 mit der darauf befestigten Schneidleiste 3 durch zwei parallele und zueinander beabstandete Federblätter 43 gezeigt. Diese Federblätter 43 sind an ihrem unteren Ende - in diesem Ausführungsbeispiel einstückig - mit einer Befestigungsplatte verbunden. An ihrem anderen oberen Ende tragen sie den Schneidleistenhalter 4 samt Feststellvorrichtung 42 und dem optionalen Schneidspaltvergrößerer 44.

In Figur 2 ist nachvollziehbar, dass im ersten Schritte der Null-Justage des Schneidspaltes 41 nach dem Lösen der Feststellvorrichtung 42 und nach dem Abheben des hier als Selbsthemmung dienenden Keils 46 mitsamt der als Schneidspaltvergrößerer 44 dienenden Einstellschraube 47, der Schneidleistenhalter 4 durch die Kraft der Federblätter 43 soweit nach links schwenkt, bis die Schneidleiste an einen Schneidezahn 21 auf dem Schneidrotor 2 anschlägt.

In Figur 2 kann auch der zweite Schritt der Nulljustage gut nachempfunden werden, in dem der Keil 46 wieder auf die Gleitebene 45 abgesenkt wird. Die Kraft der beiden Federblätter 43 wird durch das Aufliegen und die Reibung des Keils 46 auf der Gleitebene 45 soweit gehemmt, dass sie den Schneidleistenhalter 4 nicht mehr auf den Schneidrotor 2 hin bewegen können. Der Keil 46 drückt jedoch nur so wenig auf die Gleitebene 45, dass der Schneidleistenhalter 4 weiter am Schneid rotor 2 anliegt.

Wenn jetzt der Schneidrotor 2 langsam entgegen seiner Arbeitsrichtung gedreht wird - in Figur 2 ist das entgegen dem Uhrzeigersinn - dann drückt die jeweils in Figur 1 nach oben weisende Flanke eines jeden Schneidezahnes 21 die Schneidleiste 3 vom Schneidrotor 2 weg. Die erste auftreffende Flanke eines Schneidezahnes bewegt die Schneidleiste 3 über die weiteste Strecke. Wenn alle Schneidezähne 21 exakt identischen wären, würden alle folgenden Schneidezähne 21 die Schneidleiste 3 nicht mehr bewegen. Da jedoch durch Toleranzen alle Schneidezähne 21 von unterschiedlicher Größe sind, schiebt der am weitesten herausragende Schneidezahn 2 die Schneidleiste am weitesten vom Schneidrotor 2 weg.

Wegen dem im zweiten Schritt als Selbsthemmung auf die Gleitebene 45 abgesenkten Keil 46 bewegt sich der Schneidleistenhalter 4 auch beim Vorbeischwenken eines kleineren Schneidezahnes 21 nicht wieder zurück, sondern verharrt in seiner Position.

Figur 2 veranschaulicht gut, dass nach der Null-Justage der Schneidleiste 3 auf den am weitesten herausragenden Schneidezahn 21 die Justage abgeschlossen werden kann, indem die Feststellvorrichtung 42 den Schneidleistenhalter 4 in seiner Bewegbarkeit blockiert.

In Figur 2 kann aber auch eine weitere - optionale - Schneidspaltvergrößerung durch den Schneidspaltvergrößerer 44 plausibilisiert werden. Die in Figur 2 gezeigte Variante nutzt den als Selbsthemmung dienenden Keil 46 zusätzlich auch als Schneidspaltvergrößerer 44, weshalb diese die Justageprozedur von dem in Anspruch 19 geschilderten Verfahren für einen zusätzlichen Schneidspaltvergrößerer 44 abweicht.

Statt der Blockade des Schneidleistenhalters 4 durch die Feststellvorrichtung 41 wird zuerst das Gehäuse des Keils 46 fixiert und dann der Keil 46 durch Verdrehen seiner Einstellschraube 47 so weit bewegt - in Figur 2 nach unten - dass der Schneidspalt 41 zwischen der Schneidleiste 3 und den Schneidezähnen 21 auf das gewünschte Maß vergrößert wird. Das Maß ergibt sich aus der Anzahl der Umdrehungen der Einstellschraube 47. Sobald der gewünschte Schneidspalt erreicht ist, wird auch die Feststellvorrichtung 42 wieder angezogen und der Stranggranulator ist mit neuer Einstellung zum Betrieb bereit.

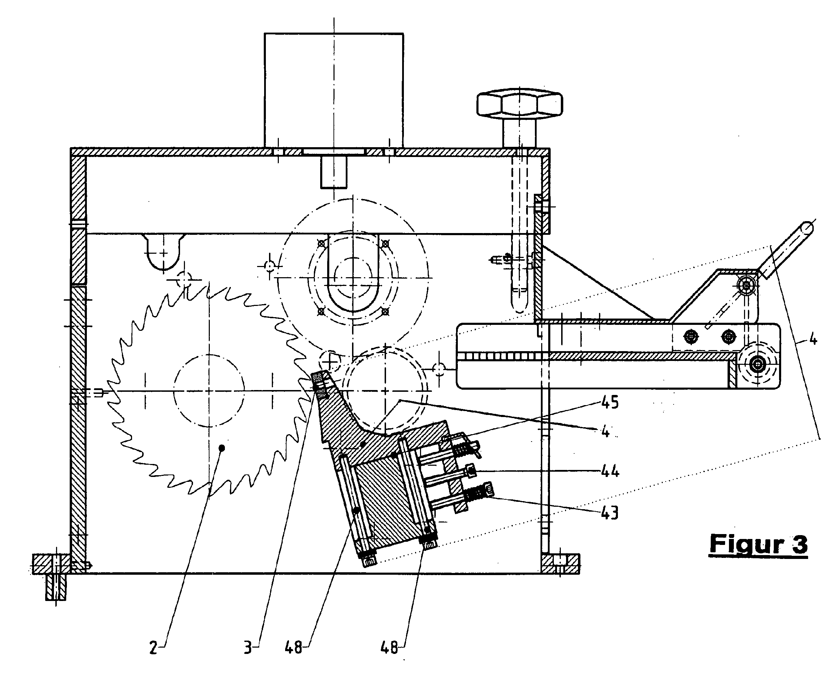

In **Figur 3** wird als alternative Ausführungsform eine Gleitebene 45 gezeigt, auf der sich der gesamte Schneidleistenhalters 4 bewegen kann. Über zwei teilelastische Stangen 48 ist der Schneidleistenhalter 4 mit dem Maschinengrundkörper verbunden. Durch Verschieben des Halters 4 werden beide teilelastischen Stangen 48 verschwenkt und ihre Köpfe werden näher an die maschinenseitige Fixierung herangezogen. Eine Feder zwischen jedem Kopf der teilelastischen Stangen 48 und dem Maschinenkörper sorgt dafür, dass der Schneidleistenhalter 3 stets auf die Gleitebene 45 gedrückt wird.

In der in Figur 3 gezeichneten Variante ist die Feder 43, die die Schneidleiste 3 an das Schneidezähnen 21 drückt, rechts unten zu erkennen. Sie wird in dieser Variante vom Schaft einer Schraube geführt.

Oberhalb dieser Schraube ist eine weitere Schraube zu erkennen, die als Schneidspaltvergrößerer 44 für den Schneidspalt 41 dient. Dazu ist sie Sinnvollerweise mit einem Feingewinde ausgerüstet.

Oberhalb des Schneidspaltvergrößerers 44 ist eine andere Variante der Selbsthemmung dargestellt, hier bestehend aus einem Stift, auf den ein Klemmhebel aufgesetzt ist, der durch die Kraft einer Feder gegen den Stift gedrückt wird und ihn dadurch blockiert. Durch manuellen Druck auf den Klemmhebel wird die Blockade gelöst und der Schneidleistenhalter 4 drückt die Schneidleiste 3 gegen einen Schneidezahn 21. Bei anliegendem Klemmhebel kann der Schneidleistenhalter 4 nur in eine Richtung bewegt werden, nämlich vom Schneidrotor 2 weg, nicht aber auf ihn hin.

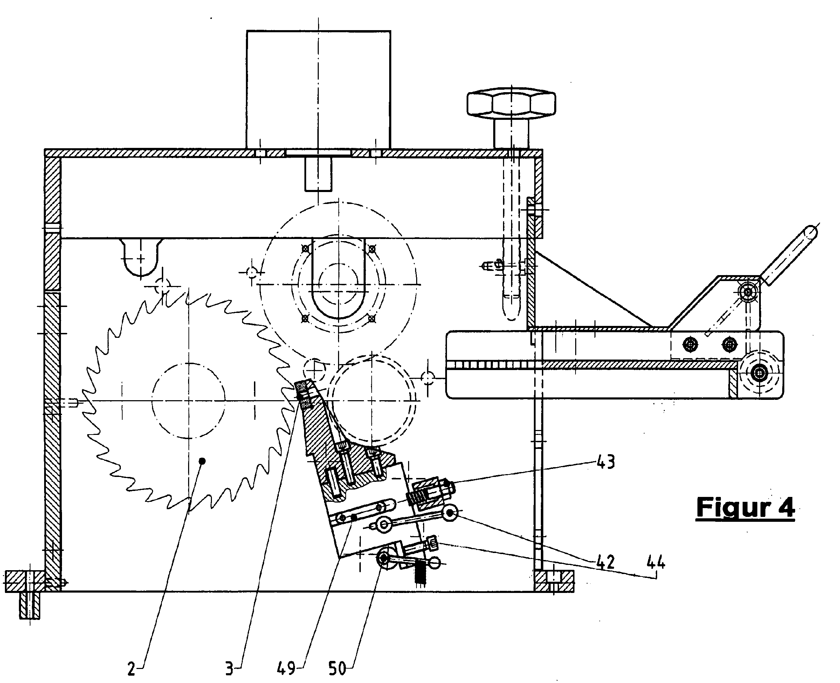

In **Figur 4** wird die Schneidleistenhalter 4 durch ein Gleitstück 49 in einem dazu komplementären Schlitz geführt. Die Feder 43, die die Schneidleiste 3 und das Schneidezähnen 21 drückt, ist hier als eine Spiralfeder ausgeführt, die von einer Hülse umgeben ist, welche zur Führung der Feder 43 dient. Unterhalb des Gleitstückes 49 ist die Feststellvorrichtung 42 mit einem Hebel zu erkennen.

Darunter ist als eine weitere Ausführungsform einer Selbsthemmung ein Excenter 50 dargestellt, der über eine Feder an einem Hebel verschwenkt wird und dadurch die Bewegung des Schneidleistenhalters 4 hemmt.

Als Ausführungsvariante für den optionalen Schneidspaltvergrößerer 44 ist eine Einstellschraube mit einem Feingewinde dargestellt, die auf eine Andruckplatte für den Excenter 50 drückt. Durch die Drehung der Einstellschraube wird die Andruckplatte vom Schneidplattenhalter 4 weg gepresst und der Schneidspalt 41 dadurch vergrößert.

### Bezugszeichenliste

- 1: Einzugswerk für Strangzuführung
- 2: Schneidrotor für Strangzerteilung
- 21: Schneidezähne auf Schneidrotor 2
- 3: Schneidleiste als Gegenstück zu Schneidezähnen 21
- 4: Schneidleistenhalter für Schneidleiste 3
- 41: Schneidspalt zwischen Schneidleiste 3 und Schneidezahn 21
- 42: Feststellvorrichtung
- 43: Feder, drückt Schneidleiste 3 an Schneidezähne 21
- 44: Schneidspaltvergrößerer für Schneidspalt 41
- 45: Gleitebene für Schneidleistenhalter 4
- 46: Keil, liegt auf Gleitebene 45 auf
- 47: Einstellschraube für Keil 46
- 48: Stangen, teilelastisch, an Schneidleistenhalter 4
- 49: Gleitstück
- 50: Excenter

## Patentansprüche

1. Stranggranulator zum Zerteilen von strangförmigem Material, bestehend aus
- einem Einzugswerk (1) für die Zuführung des zu zerteilenden Materials und
- einem drehbaren Schneidrotor (2) mit darauf angeordneten Schneidezähnen (21) und
- einer Schneidleiste (3),
- die das Gegenstück zu den daran vorbei rotierenden SchneideZähnen (21) ist und
- die auf einem Schneidleistenhalter (4) befestigt ist und
- ein Schneidspalt (41) zwischen Schneidleiste (3) und einem Schneidezahn (21) durch eine Bewegung des Schneidleistenhalters (4) gegenüber dem Schneidrotor (2) verstellbar ist
**dadurch gekennzeichnet, dass**
- der Schneidspalt (41) auf Null reduzierbar ist, indem der Schneidleistenhalter (4) nach Lösen einer Feststellvorrichtung (42) durch die Kraft wenigstens einer Feder (43) an den Schneidrotor (2) andrückbar ist und
- eine Selbsthemmung auf den Schneidleistenhalter (4) andrückbar ist, welche die Bewegbarkeit des Schneidleistenhalters (4) durch die Kraft der Feder (43) hemmt, aber noch eine Bewegbarkeit durch die Kräfte der Schneidezähne (21) bei Drehung des Schneidrotors (2) entgegen seiner Arbeitsrichtung zulässt und
- die Selbsthemmung vom Schneidleistenhalter (4) lösbar ist.

2. Stranggranulator nach dem vorhergehenden Anspruch 1,
**dadurch gekennzeichnet, dass** der Schneidspalt (41) durch einen Schneidspaltvergrößerer (44) vergrößerbar ist.

3. Stranggranulator nach einem der vorhergehenden Ansprüche,
**dadurch gekennzeichnet, dass** die Feder (43) aus zwei parallelen und zueinander beabstandeten Federblättern besteht, die an einem Ende ortsfest eingespannt sind und am anderen Ende den Schneidleistenhalter (4) tragen.

4. Stranggranulator nach dem vorhergehenden Anspruch 4, **dadurch gekennzeichnet, dass** beide Federblätter einstückig mit einem Ende an den Schneidleistenhalter (4) und mit dem anderen Ende an eine Befestigungsplatte angeformt sind.

5. Stranggranulator nach den vorhergehenden Ansprüchen 1 bis 4,
**dadurch gekennzeichnet, dass** der Schneidleistenhalter (4)
- auf einer Ebene verschiebbar ist, die außerhalb der Drehachse des Schneidrotors oder einer Parallelen dazu verläuft und
- im Schneidleistenhalter (4) wenigstens eine teilelastische Stange (48) mit einem Ende fixiert ist und mit dem anderen Ende durch eine Bohrung in einer ortsfesten Öse oder einer Trägerplatte geführt ist, wobei sich auf die zur Stange gegenüber liegende Fläche der Öse oder der Trägerplatte eine Feder abstützt.

6. Stranggranulator nach den vorhergehenden Ansprüchen 1 bis 3,
**dadurch gekennzeichnet, dass** in den Schneidleistenhalter (4) zwei parallel verlaufende Schlitze oder Langlöcher eingebracht sind, in die je eine ortsfeste Passfeder oder je ein anderes, ortsfestes Gleitstück (49) eingreift, an denen entlang der Schneidleistenhalter (4) verschiebbar ist.

7. Stranggranulator nach einem der vorhergehenden Ansprüche,
**dadurch gekennzeichnet, dass** der Schneidleistenhalter (4) als Selbsthemmung eine Gleitebene (45) aufweist,
- die zu seiner Bewegungsrichtung geneigt oder senkrecht ausgerichtet ist und
- auf welcher ein Keil (46) aufliegt, der durch eine Einstellschraube (47) verschiebbar ist.

8. Stranggranulator nach dem vorhergehenden Anspruch 7, **dadurch gekennzeichnet, dass** der Keil (46) von der Gleitebene (45) lösbar ist.

9. Stranggranulator nach einem der vorhergehenden Ansprüche,
**dadurch gekennzeichnet, dass** der Schneidleistenhalter (4) als Selbsthemmung eine Gleitebene (45) aufweist,
- die zu seiner Bewegungsrichtung geneigt oder senkrecht ausgerichtet ist und
- die von einer Excenterscheibe (50) oder
einer Kurvenscheibe oder
einer Nocke
berührt wird, die um eine Schwenkachse verschwenkbar ist.

10. Stranggranulator nach dem vorhergehenden Anspruch 9, **dadurch gekennzeichnet, dass** auf der Schwenkachse ein Verschwenkhebel befestigt ist, mit dem die Excenterscheibe (50) oder Kurvenscheibe oder Nocke von der Gleitebene (45) lösbar ist.

11. Stranggranulator nach den vorhergehenden Ansprüchen 2, 7 und/oder 8, **dadurch gekennzeichnet, dass** als Schneidspaltvergrößere (44) der Keil (46) mit einer Einstellschraube (47) verschiebbar ist.

12. Stranggranulator nach einem der vorhergehenden Ansprüche,
**dadurch gekennzeichnet, dass** zur Erfassung der Änderung des Schneidspaltes (41) durch einen Schneidspaltvergrößerer (44) an einer Fuge zwischen einem festen und einem bewegbaren Teil auf der einen Seite eine Skala mit Messstrichen von gleicher Breite und auf dem anderen Teil ein Nonius zur Interpolation von Werten zwischen den Messstrichen aufgebracht ist.

13. Stranggranulator nach dem vorhergehenden Anspruch 2, **dadurch**
**gekennzeichnet, dass** die Justage des Schneidspaltes (41)
- entweder durch eine Schwenkbewegung des Schneidleistenhalters (4) mittels Federblättern oder teilelastischen Stangen (48)
- oder durch eine Linearbewegung mit Führung durch ein Gleitstück (49) ein Schlitzen oder in Langlöchern erfolgt und
als Schneidspaltvergrößerer (44)
- eine Verstellschraube mit Feingewinde oder
- ein weiterer, linear verschiebbarer Keil oder
- eine weitere, verschwenkbare Excenterscheibe oder Kurvenscheibe oder
Nocke
dient.

14. Stranggranulator nach dem vorhergehenden Anspruch 13,
**dadurch gekennzeichnet, dass**
der Schneidspaltvergrößerer (44)
- außerhalb des Schneidleistenhalters (4) befestigt ist und
- auf eine Gleitebene (45) zugreift, die auf dem Schneidleistenhatter (4) angeordnet ist.

15. Stranggranulator nach dem vorhergehenden Anspruch 13,
**dadurch gekennzeichnet, dass** der Schneidspaltvergrößerer (44)
- auf dem Schneidleistenhalter (4) befestigt ist und

16. Stranggranulator nach einem der vorhergehenden Ansprüche,
**dadurch gekennzeichnet, dass**
zur Automatisierung der Schneidspalteinstellung
- der Schneidleistenhalter (4) und die Selbsthemmung von je einem Aktor wie z.B. einem Pneumatikzylinder bewegbar sind,
- der den Befehlen einer Steuerung folgt,
- welche auch die Drehrichtung und die Drehzahl des Schneidrotors überwacht.

17. Stranggranulator nach dem vorhergehenden Anspruch 16, **dadurch gekennzeichnet, dass** Hilfsaktoren für die Anpassung der Aktoren des Schneidleistenhalters (4) und der Selbsthemmung an die Reibungskoeffizienten und anderen Eigenschaften vorhanden sind und von der Steuerung regelbar sind.

18. Verfahren zur Justage des Schneidspaltes (41) zwischen den Schneidezähnen (21) und der Schneidleiste (3) eines Stranggranulators nach wenigstens einem der vorhergehenden Ansprüche, **dadurch gekennzeichnet, dass**
- im ersten Schritt bei stehendem Schneidrotor (2)
- die Selbsthemmung vom Schneidleistenhalter (4) gelöst wird und
- die Feststellvorrichtung (42) für die Bewegbarkeit des Schneidleistenhalters (4) gelöst wird, so dass
- die Schneidleiste (3) vom Schneidleistenhalter (4) durch die Kraft der Feder (43) an wenigstens einen Schneidezahn (21) angedrückt wird und
- im zweiten Schritt
- der Schneidrotor (2) rückwärts - d.h. entgegen seiner Arbeitsrichtung - mit einer sehr niedrigen Drehzahl um eine ganze Umdrehung gedreht wird, wodurch die Flanken der Schneidezähne (21) die Schneidleiste (3) vom Schneidrotor weg drücken und
- die Selbsthemmung an den Schneidleistenhalter (4) gedrückt wird, so dass der Schneidleistenhalter (4) vom Schneidrotor (2) nur noch in der von ihm weg weisenden Richtung bewegt werden kann und
- im dritten Schritt die Feststellvorrichtung (42) wieder angezogen wird, wodurch der Schneidleistenhalter (4) fixiert wird.

19. Verfahren zur Justage des Schneidspaltes (41) zwischen den Schneidezähnen (21) und der Schneidleiste (3) eines Stranggranulators nach dem vorhergehenden Anspruch (16) **dadurch gekennzeichnet, dass**
- im vierten Schritt eine Fixierung am Schneidspaltvergrößerer (44) gelöst wird und
- im fünften Schritt der Schneidspaltvergrößerer (44) soweit bewegt wird, bis er in festen Kontakt mit seinem Gegenstück auf dem Schneidleistenhalter (4) gekommen ist und
- im sechsten Schritt die Feststellvorrichtung (42) des Schneidleistenhalters (4) gelöst Wird und
- im siebten Schritt der Schneidspalt (41) mittels des Schneidspaltvergrößerers (44) auf das gewünschte Maß vergrößert wird und
- im achten Schritt die Feststellvorrichtung (42) des Schneidleistenhalters (4) wieder angezogen wird.

## Claims

1. Strand pelletizer for comminuting strand-shaped material, comprising
- a feed mechanism (1) for feeding the material to be comminuted, and
- a rotatable cutting rotor (2) with cutting teeth (21) arranged thereon, and
- a cutting bar (3),
- which is the counterpart to the cutting teeth (21) rotating past it and
- which is fixed on a cutting bar holder (4) and
- a cutting clearance (41) between the cutting strip (3) and a cutting tooth (21) is adjustable by a movement of the cutting bar holder (4) with respect to the cutting rotor (2), **characterised in that**
- the cutting clearance (41) can be reduced to zero by the fact that, after a fixing device (42) is released, the cutting bar holder (4) can be pressed against the cutting rotor (2) by the force of at least one spring (43) and
- that a self-locking means can be pressed against the cutting bar holder (4), which locks the mobility of the cutting bar holder (4) by the force of the spring (43), but still permits movement by the forces of the cutting teeth (21) on rotation of the cutting rotor (2) opposite to its working direction, and
- the self locking (4) can be released from the cutting bar holder.

2. Strand pelletizer according to the preceding claim 1, **characterised in that** the cutting clearance (41) can be enlarged by means of a cutting clearance enlarging means (44).

3. Strand pelletizer according to one of the preceding claims, **characterized in that** the spring (43) consists of two mutually parallel spring leaves, which are spaced from one another and are constrained at one end so as to be fixed in place and bear the cutting bar holder (4) at the other end.

4. Strand pelletizer according to the preceding claim 4, **characterized in that** both spring leaves are integrally moulded on the cutting bar holder (4) at one end and on a fastening plate at the other end.

5. Strand pelletizer according to the preceding claims 1 to 4, **characterized in that** the cutting bar holder (4)
- can be traversed on a plane, which extends outside the axis of rotation of the cutting rotor or of a parallel thereto, and
- at least one partly elastic rod (48) is fixed at one end in the cutting bar holder (4) and, at the other end, is guided through a borehole in a stationary eye or in a carrier plate, a spring being supported on that surface of the eye or of the carrier plate that lies opposite the rod.

6. Strand pelletizer according to the preceding claims 1 to 3, **characterised in that** into the cutting bar holder (4) are introduced two parallel slits or elongated holes, into each of which a stationary key or another fixed sliding piece (4) engages, along which the cutting bar holder (4) can be displaced.

7. Strand pelletizer according to one of the preceding claims, **characterized in that** the cutting bar holder (4) has, as self-locking means, a sliding plane (45),
- which is inclined or perpendicular with respect to the direction of movement of the cutting bar holder and
- on which a wedge (46) lies, which can be displaced by means of a setting screw (47).

8. Strand pelletizer according to the preceding claim 7, **characterised in that** the wedge (46) can be released from the sliding plane (45).

9. Strand pelletizer according to one of the preceding claims, **characterized in that** the cutting bar holder (4) has, as self-locking means, a sliding plane (45),
- which inclined or perpendicular with respect to its direction of movement and
- which is in contact with an eccentric disc (50) or
a cam disk or
a cam,
which is pivotable about a fulcrum.

10. Strand pelletizer according to the preceding claim 9, **characterised in that**, on the pivot axis, a pivot lever is fixed, with which the eccentric disc (50) or cam disk or cam can be released from the sliding plane (45).

11. Strand pelletizer according to the preceding claims 2, 7 and/or 8, **characterised in that**, as cutting clearance enlarging means (44), the wedge (46) is slidable with a setting screw (47).

12. Strand pelletizer according to one of the preceding claims,
**characterised in that**, in order to register the change of the cutting clearance (41) by means of a cutting clearance enlarging means (44), a scale with graduation marks of equal width is mounted on a joint between a fixed and a movable portion, and a vernier scale, for interpolation of values between the graduation marks, is mounted on the other portion.

13. Strand pelletizer according to the preceding claim 2,
**characterised in that** the adjustment of the cutting clearance (41) takes place
- either by means of a pivot movement of the cutting bar holder (4) by means of spring leaves or partly elastic rods (48)
- or by means of a linear movement with guidance by means of
a sliding piece (49) in slits or in elongated holes
and
- an adjusting screw with precision thread or
- a further, linearly displaceable wedge or
- A further, pivotable eccentric disc or
cam disk or
cam
serves as cutting clearance enlarging means (44).

14. Strand pelletizer according to the preceding claim 13,
**characterised in that**
the cutting clearance enlarging means (44)
- is fixed outside the cutting bar holder (4) and
- engages on a sliding plane (45), which is arranged on the cutting bar holder (4).

15. Strand pelletizer according to the preceding claim 13, **characterised in that** the cutting clearance enlarging means (44)
- is fixed on the cutting bar holder (4) and [sic]

16. Strand pelletizer according to one of the preceding claims,
**characterised in that**
in order to automate the cutting clearance setting
- the cutting bar holder (4) and the self locking means are movable by means of an actuator in each case, for example a pneumatic cylinder,
- which follows the commands of a control system,
- which monitors the direction and speed of rotation of the cutting rotor.

17. Strand pelletizer according to the preceding claim 16,
**characterised in that** auxiliary actuators for adaptation of the actuators of the cutting bar holder (4) and of the self-locking means to the coefficients of friction and to other properties are present, and can be controlled by the control system.

18. Method for adjusting the cutting gap (41) between the cutting teeth (21) and the cutting bar (3) of a strand pelletizer according to at least one of the preceding claims,
**characterised in that**
- in the first step, with the cutting rotor (2) stationary,
- the self locking means is released from the cutting bar holder (4), and
- the fixing means (42) for the movability of the cutting bar holder (4) is released, such that
- the cutting bar (3) of the cutting bar holder (4) is pressed by the force of the spring (43) on at least one cutting tooth (21), and
- in the second step
- the cutting rotor (2) is rotated backwards - i.e. against its working direction - with a very low rotational speed by a full rotation, as a result of which the flanks of the cutting teeth (21) force the cutting bar (3) away from the cutting rotor, and
- the self-locking means is forced onto the cutting bar holder (4), so that the cutting bar holder (4) can only be moved by the cutting rotor (2) in the direction facing away from it, and
- in the third step, the fixing means (42) is tightened again, as a result of which the cutting bar holder (4) is fixed.

19. Method for adjusting the cutting gap (41) between the cutting teeth (21) and the cutting bar (3) of a strand pelletizer according to the preceding claim 16, **characterised in that**
- in the fourth step, a fixing on the cutting gap enlarging means (44) is released, and
- in the fifth step, the cutting gap enlarging means (44) is moved until it comes into firm contact with its counterpart on the cutting bar holder (4), and
- in the sixth step, the fixing means (42) of the cutting bar holder (4) is released, and
- in the seventh step, the cutting clearance (41) is enlarged to the desired extent by means of the cutting gap enlarging means (44), and
- In the eighth step, the fixing means (42) of the cutting bar holder (4) is tightened again.

## Revendications

1. Granulateur en ligne destiné à fendre des matériaux en forme de cordon, consistant en
■ un dispositif d'insertion (1) destiné à alimenter le matériau devant être fendu et
■ un rotor de découpe rotatif (2) sur lequel sont disposées des dents de découpe (21) et
■ une baguette de découpe (3),
o qui est la pièce de contrepartie aux dents de découpe (21) en rotation passant devant et
o qui est fixée sur un support de baguette de découpe (4),
o une fente de découpe (41) pouvant être réglée entre la baguette de découpe (3) et une dent de découpe (21) à travers un déplacement du support de la baguette de découpe (4) vis-à-vis du rotor de découpe (2)
**caractérisé par le fait**
■ **que** la fente de découpe (41) peut être réduite à zéro par pressage sur le rotor de découpe (2) du support de la baguette de découpe (4) après détachement d'un dispositif d'arrêt (42) par la force d'au moins un ressort (43),
■ une auto-inhibition pouvant être pressée sur le support de la baguette de découpe (4), qui inhibe la capacité de déplacement du support de la baguette de découpe (4) par la force du ressort (43), tout en permettant encore une capacité de déplacement par les forces des dents de découpe (21) par rotation du rotor de déplacement (2) dans le sens inverse à celui de son fonctionnement,
■ l'auto-inhibition pouvant être détachée de la baguette de découpe (4).

2. Granulateur en ligne selon la revendication précédente 1, **caractérisé par le fait que** la fente de découpe (41) peut être agrandie par un agrandisseur de la fente de découpe (44).

3. Granulateur en ligne selon une des revendications précédentes **caractérisé par le fait que** les ressorts (43) consistent en deux lames de ressort parallèles et disposés à une certaine distance l'une de l'autre, qui sont tendues à une extrémité de façon à rester fixes, et qui portent le support de baguette de découpe (4) à l'autre extrémité.

4. Granulateur en ligne selon la revendication 4, **caractérisé par le fait que** les deux lames de ressort sont formées en une pièce sur le support de baguette de découpe (4) et avec l'autre extrémité sur une plaque de fixation.

5. Granulateur en ligne selon une des revendications précédentes 1 à 4, **caractérisé par le fait**
■ **que** le support de la baguette de découpe (4) peut être déplacé sur une surface qui court en dehors de l'axe de rotation du rotor de découpe ou d'une parallèle à cela,
■ **que** dans le support de la baguette de découpe (4), au moins une tige (48) partiellement élastique est fixée par une autre extrémité à travers un perçage dans un oeillet fixe, ou menée à une plaque porteuse, sachant qu'un ressort s'appuie sur la surface située vis-à-vis de l'oeillet ou de la plaque porteuse.

6. Granulateur en ligne selon une des revendications précédentes 1 à 3, **caractérisé par le fait que** deux fentes courant parallèlement ou des trous oblongs sont disposés dans le support de la baguette de découpe (4), dans chacune desquelles vient se prendre un ressort d'ajustage fixe ou un autre coulisseau (49) le long duquel le support de la baguette de découpe (4) peut être déplacé.

7. Granulateur en ligne selon une des revendications précédentes, **caractérisé par le fait que** le support de la baguette de découpe (4) présente un niveau de glissement (45) en tant d'auto-inhibition,
■ qui tend vers son sens de déplacement ou est orienté à la verticale et
■ repose sur une cale (46), qui peut être déplacée par une vis de réglage (47).

8. Granulateur en ligne selon la revendication précédente 7, **caractérisé par le fait que** la cale (46) peut être détachée du niveau de glissement (45).

9. Granulateur en ligne selon une des revendications précédentes, **caractérisé par le fait que** le support de la baguette de découpe (4) présente un niveau de glissement en tant qu'auto-inhibition,
■ qui tend vers son sens de déplacement ou est orienté à la verticale et
■ qui est touché par un disque excentrique (50) ou est touché par une came sectorielle ou
une came,
qui peut être pivoté autour d'un axe de pivotement.

10. Granulateur en ligne selon la revendication 9, **caractérisé par le fait qu'**un levier de basculement est fixé sur l'axe de pivotement, à l'aide duquel le disque excentrique (50) ou la came sectorielle ou une came peut être détaché du niveau de glissement (45).

11. Granulateur en ligne selon une des revendications précédentes 2, 7 et/ou 8, **caractérisé par le fait que** la cale peut être, en tant qu'agrandisseur de la fente de découpe, déplacée à l'aide d'une vis de réglage (47).

12. Granulateur en ligne selon une des revendications précédentes, **caractérisé par le fait que**, pour la saisie de la modification de la fente de découpe (41) par un agrandisseur de la fente de découpe (44) sur un joint entre une partie fixe et une partie mobile, sont disposés, d'une part une échelle pourvue d'une graduation de la même largeur, et d'autre part un vernier destiné à interpoler des valeurs entre les traits de graduation.

13. Granulateur en ligne selon la revendication précédente 2, **caractérisé par le fait que** l'ajustage de la fente de découpe (41) se fasse
■ soit à travers un mouvement de pivotement du support de la baguette de découpe (4) au moyen de lames de ressort ou de tiges partiellement élastiques (48)
■ ou à travers un déplacement linéaire avec guidage par un coulisseau (49) dans des fentes ou dans des trous oblongs,
■ une vis de réglage ayant un filetage fin ou
■ une autre cale pouvant être déplacée linéairement ou
■ un autre disque excentrique, ou came sectorielle, ou came pouvant être pivotée
servant d'agrandisseur de la fente de découpe (44)

14. Granulateur en ligne selon la revendication précédente 13, **caractérisé par le fait que** l'agrandisseur de la fente de découpe
■ est fixé en dehors du support de la baguette de découpe(4) et
■ se prend dans un niveau de glissement (45) qui est disposé sur le support de la baguette de découpe (4).

15. Granulateur en ligne selon la revendication précédente 13, **caractérisé par le fait que** l'agrandisseur de la fente de découpe (44)
■ est fixé sur le support de la baguette de découpe(4).

16. Granulateur en ligne selon une des revendications précédentes, **caractérisé par le fait que**, pour automatiser le réglage de la fente de découpe,
■ le support de la baguette de découpe (4) et l'auto-inhibition peut être chacun déplacé par un acteur comme par exemple un vérin pneumatique,
■ qui suit les ordres d'une commande,
■ qui surveille également le sens de rotation et le régime du rotor de découpe.

17. Granulateur en ligne selon la revendication précédente 16, **caractérisé par le fait que** des acteurs auxiliaires destinés à adapter les acteurs du support de la baguette de découpe (4) et de l'auto-inhibition aux coefficients de frottement et à d'autres propriétés existent et peuvent être réglés par la commande.

18. Procédé destiné à ajuster la fente de découpe (41) entre les dents de découpe (21) et la baguette de découpe (3) d'un granulateur en ligne selon au moins une des revendications précédentes, **caractérisé par le fait que**
■ dans une première étape, le rotor de découpe étant à l'arrêt (2),
• l'auto-inhibition est détachée du support de la baguette de découpe (4) et
• le dispositif d'arrêt (42) destiné à permettre le déplacement du support de la baguette de découpe (4) est détaché de façon à ce que
• la baguette de découpe (3) du support de la baguette de découpe (4) est pressée par la force du ressort (43) sur au moins une dent de découpe (21) et que
• dans un deuxième temps
• le rotor de découpe (2) effectue une rotation complète en arrière - c'est-à-dire dans le sens inverse à celui de son fonctionnement - avec un régime très bas, grâce à quoi les flancs des dents de découpe (21) repoussent la baguette de découpe (3) du rotor de découpe et que
• l'auto-inhibition est pressée sur le support de la baguette de découpe (4), de façon à ce que le support de la baguette de découpe (4) du rotor de découpe (2) ne puisse être déplacé que dans le sens qui l'éloigne de ce dernier,
■ le dispositif d'arrêt (42) étant, dans une troisième étape, à nouveau serré en fixant le support de la baguette de découpe.

19. Procédé destiné à ajuster la fente de découpe (41) entre les dents de découpe (21) et la baguette de découpe (3) d'un granulateur en ligne selon la revendication précédente 16, **caractérisé par le fait que**
■ dans une quatrième étape une fixation est détachée sur l'agrandisseur de la fente de découpe (44) et que
■ dans une cinquième étape l'agrandisseur de la fente de découpe (44) est déplacé jusqu'à ce qu'il soit arrivé en contact avec sa pièce opposée sur le support de la baguette de découpe (4) et
■ que dans une septième étape la fente de découpe (41) est agrandie à la bonne taille au moyen de l'agrandisseur de fente de découpe (44) et que
■ dans une huitième étape le dispositif d'arrêt (42) du support de la baguette de découpe est à nouveau serré.
